# FASCICULE DE BREVET EUROPEEN

(11) **EP 2 952 317 B1**
(45) Date de publication et mention de la délivrance du brevet: **31.01.2018**
(21) Numéro de dépôt: 15170191.9
(22) Date de dépôt: 02.06.2015
(51) Int. Cl.: B29C 33/30, F01D 9/04, B29C 39/10, F01D 25/28, F04D 29/16, B29C 45/14, B29C 33/40, F01D 11/12

(54) **MOULE POUR L'INJECTION D'UNE PISTE D'ABRADABLE SOUS VIROLE INTERNE DE COMPRESSEUR DE TURBOMACHINE AXIALE**
FORM FÜR DIE EINSPRITZUNG EINER ABREIBBAREN LAUFFLÄCHE IM INNENRING EINES KOMPRESSORS EINES AXIALEN TURBOTRIEBWERKS
MOULD FOR THE INJECTION OF AN ABRADABLE TRACK BENEATH THE INNER SHROUD OF AN AXIAL-FLOW TURBOMACHINE COMPRESSOR

(30) Priorité: 05.06.2014 BE 201400428
(43) Date de publication de la demande: 09.12.2015
(73) Titulaire: Safran Aero Boosters SA, 4041 Herstal (BE)
(72) Inventeur: LESZCZYNSKI, Charles, 4680 Hermee (BE); BIEMAR, M. Guy, 4671 Blegny (BE)
(74) Mandataire: Lecomte & Partners

(56) Documents cités:
- EP-A1- 2 075 416
- EP-A1- 2 811 121
- EP-A1- 2 886 802
- EP-A1- 2 886 804
- WO-A1-2014/013190
- FR-A1- 2 977 521
- US-A- 4 349 313
- US-A- 5 735 045
- US-A1- 2004 231 155

## Description

### Domaine technique

L'invention a trait à l'injection d'une couche de matériau abradable sous une virole interne de turbomachine axiale. Plus précisément, l'invention a trait à un segment angulaire de moule pour injection d'une couche de matériau abradable à l'intérieur d'une virole interne de compresseur de turbomachine axiale. L'invention a également trait à une méthode de fabrication d'une turbomachine munie d'une virole avec une couche de silicone injectée. L'invention traite également d'un procédé de moulage d'une couche de matériau abradable à l'intérieur d'une virole interne de turbomachine axiale.

### Technique antérieure

Dans l'optique d'augmenter leurs taux de compression, les étages de compression d'un compresseur d'une turbomachine axiale sont munis de joints d'étanchéités. Ces joints sont appliqués sur les surfaces intérieures des viroles externes et des viroles internes. Ces joints sont en matériaux abradables ou friables, qui sont aptes à s'éroder en cas de contact avec le rotor. Ces joints peuvent entrer en contact d'extrémités d'aubes rotoriques ou de léchettes sans les dégrader. De la sorte, il est possible de réduire les jeux dynamiques au niveau des joints tout en préservant l'intégrité mécanique des éléments aérodynamiques.

Les joints peuvent être en un matériau silicone qui est injecté directement sur la virole à l'aide d'un moule. Un tel moule peut être fixé à même le stator, et définit une cavité de moulage en combinaison avec la virole interne. La cavité ainsi formée correspond généralement à la forme définitive de la piste d'abradable, si besoin la piste d'abradable peut être usinée suite au démoulage.

Le document FR2977521 A1 divulgue un moule pour injecter un matériau abradable sur une virole interne de redresseur de compresseur basse pression de turbomachine axiale. Le moule permet d'injecter du silicone à même la surface interne de la virole. L'injection s'effectue à l'aide d'un moule fixé et centré directement sur le redresseur. Le moule comprend une paroi généralement tubulaire placée à l'intérieur de la virole, et des parois annulaires radiales qui coopèrent avec la virole. Le moule, combiné à la virole interne, clos une cavité de moulage annulaire. La nature de son contact avec le redresseur permet une concentricité optimale avec la couche d'abradable. Toutefois, le moule correspondant est particulièrement difficile à manipuler en raison de son poids. Le coût de ses composants constitue un investissement conséquent à cause de sa complexité, de ses moyens de fixation, de ses joints, des surfaces de centrage dont il a besoin. Son nettoyage représente une part importante de son coût d'utilisation. Aussi, la virole peut présenter un défaut de concentricité avec la virole externe, ce qui se traduit par une variation d'épaisseur de la couche d'abradable.

Le document EP 2 075 416 A1 divulgue un compresseur de turbomachine axiale. Le compresseur comprend une virole externe recevant une couche annulaire de matériau abradable silicone. Cette couche silicone est réalisée par injection d'une résine à même la virole externe à l'aide d'un moule. La couche obtenue est à cote finie.

Le document WO 2014/013190 A1 divulgue une virole externe de compresseur basse pression pour une turbomachine axiale. La virole supporte une couche annulaire de matériau abradable. Le matériau abradable est moulé de manière monobloc. Il est ensuite collé à l'intérieur de la virole interne.

Le document US 4,349,313 A divulgue une méthode de réalisation de joints abradables assurant une étanchéité entre le stator et le rotor d'une turbomachine. La méthode comprend les étapes suivantes : réalisation d'une gorge s'étendant de manière circonférentielle à l'intérieur d'un carter de la turbomachine, mise en place d'un moule contre le carter et en regard de la gorge, injection d'un matériau viscoélastique, introduction d'une bague métallique dans la gorge, et enfin durcissement du matériau viscoélastique.

### Résumé de l'invention

### Problème technique

L'invention a pour objectif de résoudre au moins un des problèmes posés par l'art antérieur. Plus précisément, l'invention a pour objectif de simplifier un moule d'injection d'une couche d'abradable à l'intérieur d'une virole de turbomachine axiale. L'invention a également pour objectif de simplifier le procédé de moulage d'une couche de résine à l'intérieur d'une virole interne de turbomachine axiale.

### Solution technique

L'invention a pour objet un moule pour injection d'une couche de matériau abradable à l'intérieur d'une virole de turbomachine axiale, le moule comprenant une paroi circulaire s'étendant axialement, deux parois annulaires s'étendant radialement vers l'extérieur depuis les extrémités axiales de la paroi axiale ; les parois étant configurées pour former une cavité annulaire de moulage à l'intérieur de la virole en combinaison avec la virole, remarquable en ce que chaque paroi radiale du moule comprend un crochet annulaire destiné à être en contact de la surface externe de la virole de sorte à permettre un maintien du moule par rapport à la virole.

Selon un mode avantageux de l'invention, les crochets forment des gorges annulaires ouvertes axialement l'une vers l'autre, chaque crochet comprend une surface annulaire de rétention configurée pour permettre une rétention radiale entre le crochet et la virole, et une surface annulaire de butée configurée pour venir en butée radialement contre la virole, lesdites surfaces annulaires étant coaxiales.

Selon un mode avantageux de l'invention, le moule est segmenté, éventuellement le moule est réalisé en un matériau polymère.

Selon un mode avantageux de l'invention, le moule est formé de deux à seize segments angulaires, préférentiellement de quatre à douze segments angulaires, au moins un des segments comprend des extrémités, selon circonférence, planes et parallèles, et au moins un des segments comprend des extrémités planes dont les plans sont inclinés d'au moins 60°, préférentiellement au moins 90°.

Selon un mode avantageux de l'invention, les extrémités radialement externes des parois radiales comprennent des surfaces extérieures de guidage, éventuellement coniques, qui s'écartent l'une de l'autre vers l'extérieur de sorte à faciliter l'écartement des crochets lors de l'insertion de la virole dans le moule.

Selon un mode avantageux de l'invention, la paroi axiale comprend une portion annulaire de moindre épaisseur disposée axialement en son centre, préférentiellement l'épaisseur de la paroi axiale est inférieure à l'épaisseur des parois radiales.

Selon un mode avantageux de l'invention, la longueur axiale de la paroi axiale est supérieure à la hauteur radiale de chaque paroi radiale, préférentiellement le profil de révolution de la paroi axiale est sensiblement incurvé vers l'intérieur de sorte que lors de l'injection de la résine, la résine tend à arquer vers l'intérieur le profil de révolution de la paroi axiale de sorte à plaquer d'avantage les parois radiales contre la virole.

Selon un mode avantageux de l'invention, la virole est une virole interne.

L'invention a également pour objet un procédé de moulage d'une couche de résine, notamment de matériau abradable, à l'intérieur d'une virole de turbomachine axiale, le procédé comprenant les étapes de : (a) fourniture ou fabrication d'une virole de turbomachine, ladite virole étant reliée à une rangée annulaire d'aubes statoriques, (b) mise en place d'un moule contre la virole de sorte à définir une cavité annulaire de moulage à l'intérieur de la virole, (c) injection d'une résine à l'intérieur de la cavité de moulage, remarquable en ce que le moule comprend des crochets annulaires configurés pour maintenir le moule contre la virole, et en ce que lors de l'étape (b) mise en place du moule contre la virole, le moule est déformé de sorte à engager la virole dans les crochets du moule.

Selon un mode avantageux de l'invention, le moule comprend au moins deux crochets disposés en amont et en aval de la virole, et en ce que lors de l'étape (b) mise en place du moule, la virole est engagée dans les crochets en les écartant axialement l'un de l'autre.

Selon un mode avantageux de l'invention, chaque crochet assure une étanchéité entre le moule et la virole, préférentiellement une étanchéité circulaire.

Selon un mode avantageux de l'invention, lors de l'étape (b) mise en place du moule contre la virole, le moule est pressé radialement contre la virole.

Selon un mode avantageux de l'invention, les crochets comprennent chacun une surface de butée radiale et une surface de rétention radiale du moule à la virole, lesdites surfaces étant radialement opposées et éventuellement annulaires, et en ce que lors de l'étape (b) mise en place du moule contre la virole, la surface de butée radiale épouse la virole sur toute sa longueur.

Selon un mode avantageux de l'invention, le moule comprend une paroi annulaire s'étendant axialement entre les crochets, et en ce que lors de l'étape (b) mise en place du moule contre la virole, la paroi axiale est pliée, préférentiellement la paroi axiale comprend un profil de révolution qui est arqué lors de la mise en place du moule contre la virole.

Selon un mode avantageux de l'invention, lors de l'étape (c) injection, la résine exerce une pression contre la paroi axiale et l'arque de sorte à rapprocher les crochets annulaires en les plaquant contre la virole, préférentiellement la résine comprend du silicone.

Selon un mode avantageux de l'invention, la virole est une virole interne.

L'invention a également pour objet une méthode de fabrication d'une turbomachine comprenant une virole avec une couche annulaire de matériau abradable moulée à l'intérieur de la virole, la couche d'abradable étant moulée selon un procédé de moulage, remarquable en ce que le procédé de moulage est conforme à l'invention, et la virole comprend au moins une surface de réception de crochet annulaire de moule destiné à être accroché à la virole, la au moins une surface de réception étant au moins partiellement recouverte d'un film de matériau abradable.

Selon un mode avantageux de l'invention, au moins une ou chaque surface de réception est une surface annulaire ou en arc de cercle, et/ou elle est une surface orientée radialement vers l'intérieur.

Selon un mode avantageux de l'invention, au moins une ou chaque surface de réception délimite axialement la couche annulaire de matériau abradable, et est éventuellement destinée à épouser une surface de butée du crochet annulaire du moule.

Selon un mode avantageux de l'invention, au moins un ou chaque crochet est délimité par une surface de guidage.

Selon un mode avantageux de l'invention, les crochets sont à distance radialement de la paroi axiale, éventuellement d'une distance supérieure à l'épaisseur de la paroi axiale.

Selon un mode avantageux de l'invention, la hauteur radiale d'au moins un ou de chaque crochet est supérieure ou égale à la hauteur radiale de la surface de guidage associée.

Selon un mode avantageux de l'invention, au moins une ou chaque surface de rétention présente un profil de révolution courbe, qui forme éventuellement un quart de cercle.

Selon un mode avantageux de l'invention, au moins une ou chaque surface de butée est sensiblement tubulaire et éventuellement parallèle à l'axe de la turbomachine.

Selon un mode avantageux de l'invention, les surfaces de butée sont parallèles.

Selon un mode avantageux de l'invention, les parois radiales se chevauchent radialement.

Selon un mode avantageux de l'invention, les parois radiales sont en regard l'une de l'autre, et éventuellement généralement parallèles.

Selon un mode avantageux de l'invention, les crochets sont configurés pour se bloquer radialement sur une extrémité axiale de la virole, préférentiellement pincer axialement la virole.

Selon un mode avantageux de l'invention, au moins un ou chaque crochet a une forme de gorge annulaire, éventuellement ouverte axialement.

Selon un mode avantageux de l'invention, la hauteur radiale d'au moins un ou de chaque gorge annulaire est supérieure à la profondeur axiale de ladite gorge.

Selon un mode avantageux de l'invention, le moule est configuré pour se déformer de manière élastique lors de l'insertion de la virole à l'intérieur des crochets.

Selon un mode avantageux de l'invention, les crochets annulaires permettent un blocage radial du moule par rapport à la virole, et/ou les crochets sont disposés à des extrémités axiales opposées du moule.

Selon un mode avantageux de l'invention, la portion tubulaire est destinée à être disposée à l'intérieur de la virole, et/ou chaque paroi annulaire est destinée à être en contact d'une extrémité axiale de la virole.

Selon un mode avantageux de l'invention, le moule forme un ressort, et/ou le moule forme une pince.

### Avantages apportés

L'invention permet d'exploiter la rigidité de la virole pour réduire celle du moule, ce dernier pouvant alors être aminci ; allégé. Il peut également devenir sensiblement souple. La virole devient alors un support de positionnement et un repère pour la circularité de la couche d'abradable. L'invention permet également d'améliorer l'homogénéité de l'épaisseur d'une couche de résine moulée à l'intérieur d'une virole interne de turbomachine axiale.

Le caractère auto-stable des segments de moule permet de réduire les supports de maintien, ce qui permet de réduire la capacité thermique de l'outillage, tout comme la réalisation des segments de moule en polymère. Lors de la mise en étuve, la température monte plus rapidement et réduit le temps de fabrication.

L'emploi du polymère est particulièrement avantageux dans le cas de virole composites car on limite la dilatation différentielle. Le poids de chaque segment est de l'ordre de 100 grammes. Leur mise en place manuelle est aussi simple que la place nécessaire à leur stockage est réduite.

L'invention permet de réduite les coûts du moule car elle permet de s'adapter à des diamètres, à des longueurs axiales différents mais proches. Ainsi, une turbomachine présentant différentes viroles internes avec des évolutions géométriques sensibles pourra recevoir des pistes d'abradable à l'aide d'un même modèle de moule grâce à sa souplesse.

Le faible coût des segments permet un emploi unique, en conséquence de quoi l'érosion du moule devient négligeable malgré la présence de la charge dans la résine. L'étape de nettoyage du moule est également éliminée, ce qui réduit encore les coûts.

### Brève description des dessins

La figure 1 représente une turbomachine axiale selon l'invention.
La figure 2 est un schéma d'un compresseur de turbomachine selon l'invention.
La figure 3 représente un diagramme du procédé de réalisation de moulage selon l'invention.
La figure 4 illustre un moule d'injection de résine selon l'invention.
La figure 5 ébauche le profil du moule selon l'invention.
La figure 6 illustre une première étape intermédiaire de mise en place du moule contre la virole selon l'invention.
La figure 7 illustre une deuxième étape intermédiaire de mise en place du moule contre la virole selon l'invention.
La figure 8 illustre le résultat de la mise en place du moule contre la virole selon l'invention.
La figure 9 illustre l'étape d'injection d'une résine dans la cavité de moulage selon l'invention.

### Description des modes de réalisation

Dans la description qui va suivre, les termes intérieur ou interne et extérieur ou externe renvoient à un positionnement par rapport à l'axe de rotation d'une turbomachine axiale.

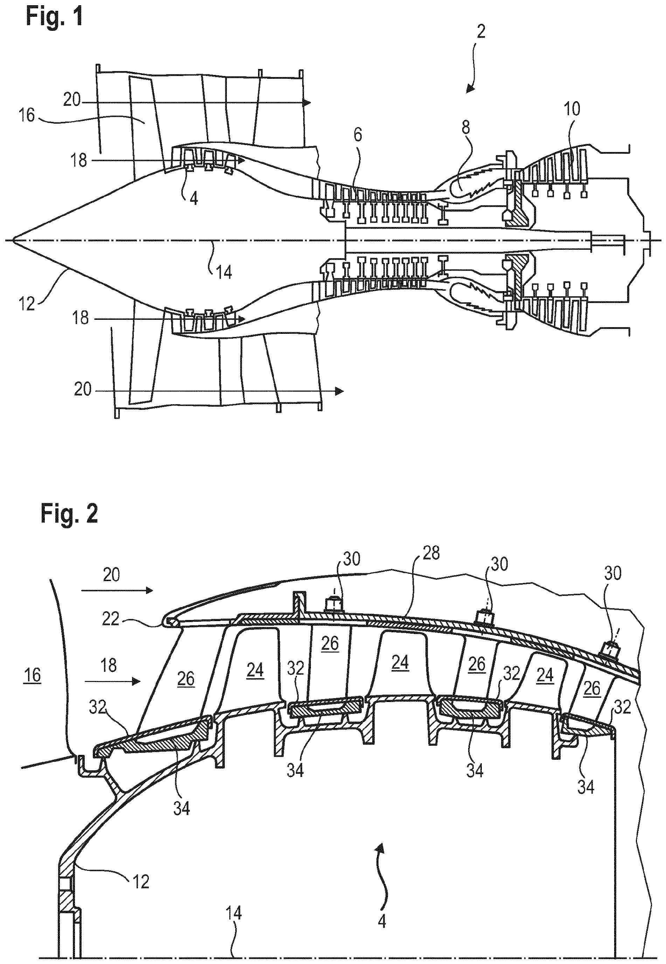

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Les compresseurs comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement depuis un carter extérieur 28, et peuvent y être fixées à l'aide d'un axe de fixation 30. Les extrémités internes des aubes statoriques 26 peuvent supporter une virole interne 32. Chaque virole interne 32 présente une forme circulaire, et peut être segmentée. Au moins une ou chaque virole interne 32 peut être formée de segments angulaires. Au moins une ou chaque virole interne 32 peut permettre de relier plusieurs aubes statoriques 26 d'une même rangée. Chaque virole interne 32 peut permettre de guider et/ou de délimiter le flux primaire 18.

Au moins une ou chaque virole interne 32 peut comprendre une couche d'étanchéité, telle une couche abradable 34 ou couche friable, qui est apte à s'user par frottement avec le rotor. Chaque couche d'abradable 34 peut être destinée à coopérer avec des léchettes, ou nervures annulaires formées sur la surface extérieure du rotor 12 afin d'assurer une étanchéité. Chaque couche d'abradable 34 peut être à base de silicone. La combinaison de léchettes et d'une couche d'abradable permet de limiter les recirculations qui se réinjectent en amont de la virole interne 32 en longeant le rotor 12.

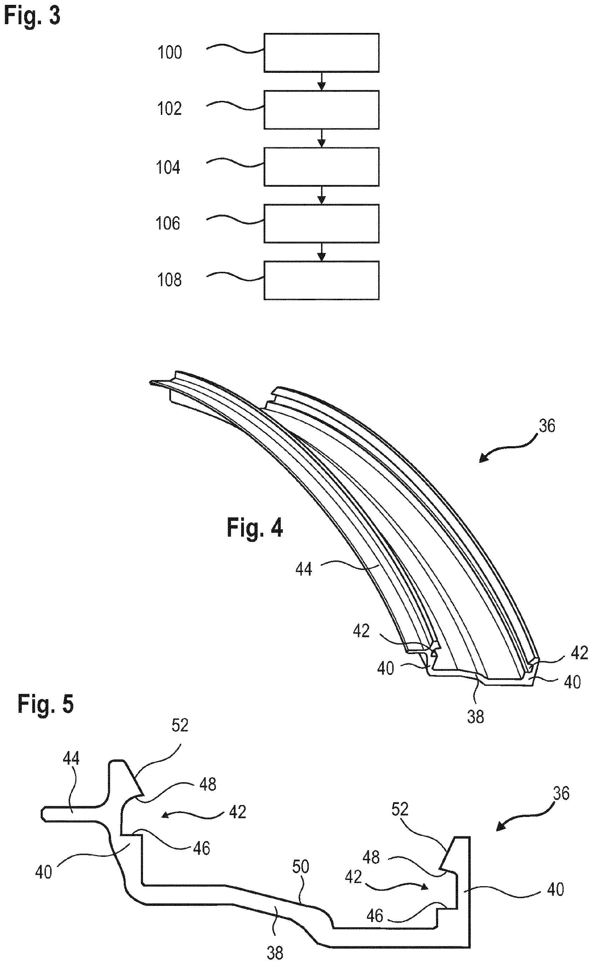

La figure 3 représente le diagramme du procédé de moulage d'une couche de résine à l'intérieur d'une virole de turbomachine. Le procédé peut être un procédé de moulage de matériau abradable dans une virole interne de turbomachine axiale. La résine peut devenir une couche de matériau abradable après polymérisation.

Le procédé peut comprendre l'enchainement des étapes suivantes ; éventuellement dans cet ordre :
(a) fourniture ou fabrication 100 d'une virole interne de turbomachine, ladite virole étant reliée à une rangée annulaire d'aubes statoriques,
(b) mise en place 102 d'un moule contre la virole interne de sorte à définir une cavité annulaire de moulage à l'intérieur de la virole,
(c) injection 104 d'une résine à l'intérieur de la cavité de moulage,
(d) polymérisation 106 de la résine ;
(e) démoulage 108 de la virole et de la couche d'abradable.

Il est à noter que la polymérisation peut se prolonger après l'étape démoulage 108.

La figure 4 représente une portion ou segment de moule 36 pour l'injection d'une couche de matériau abradable, telle une couche de résine élastomère ou silicone.

Le moule 36 peut être circulaire et former une boucle fermée ou bien ouverte. Le moule 36 peut être placé d'un tenant à l'intérieur de la virole. Il peut être appliqué progressivement à l'intérieur de la virole en suivant le tour de la virole. Ou encore, le moule 36 peut être segmenté. Il peut être formé de plusieurs segments angulaires de moule 36 qui sont disposés bout à bout pour former une boucle dans la virole.

Les bords des segments de moule peuvent être biseautés. Le moule 36 peut être formé d'au moins deux segments, par exemple huit segments. Les bords de certains segments peuvent être parallèles, d'autres segments peuvent avoir des bords inclinés d'au moins 60°, par exemple en formant des angles droits. Les segments à bords à angles droits peuvent être montés, puis ceux à bords à parallèles peuvent être intercalés pour former une alternance. Cette configuration permet de former un ensemble auto-stable grâce à la pression d'injection. Les segments à bords inclinés peuvent former des clés de voute. Eventuellement un segment de moule 36 comprend un orifice d'injection ou un évent (non représenté).

Les segments de moule 36 peuvent être réalisés en polymère, éventuellement par fabrication additionnelle, ou par extrusion. Ce matériau peut augmenter la souplesse et préserver un poids réduit. La capacité thermique est faible, et peut présenter un coefficient de dilatation proche de celui d'une virole composite.

Le moule 36 peut présenter un profil de révolution en forme générale de la lettre « U ». Le moule 36 présente une paroi circulaire 38 ou annulaire qui s'étend axialement, préférentiellement majoritairement axialement. Le moule peut comprendre des parois annulaires 40 qui s'étendent généralement radialement, par exemple généralement perpendiculairement à la paroi axiale 38. Le moule 36 peut comprendre une paroi radiale 40 à chaque extrémité axiale de la paroi axiale 38. Au moins une, ou chaque paroi radiale 40 peut comprendre un crochet annulaire 42.

Le moule 36 peut comprendre au moins une bride annulaire de renfort 44, par exemple une bride axiale disposée sur une paroi radiale 40. Cette bride peut également faciliter la mise en place du moule 36, en offrant d'avantage de surface pour plier le moule 36 lors de sa mise en place ou du démoulage. Au moins une bride 44 peut être au niveau radialement du crochet associé 42.

Le moule 42 peut présenter un profil de révolution autour de l'axe de rotation de la turbomachine. Le profil de révolution est selon un plan comprenant l'axe de rotation de la turbomachine.

La figure 5 représente le profil du moule 36 d'injection.

La paroi axiale 38 peut présenter une forme générale de tube, éventuellement conique ou en ogive. Elle peut présenter des formes de marches annulaires. La paroi axiale 38 peut présenter des variations de rayon selon la direction axiale. Cette particularité permet de réaliser une couche d'abradable à cote finie.

Au moins un ou chaque crochet annulaire 42 peut former une gorge annulaire ouverte axialement. Les crochets annulaires 42 peuvent être en regard l'un de l'autre, par exemple axialement. Ils peuvent être décalés radialement. Au moins un ou chaque crochet 42 peut comprendre une surface de butée radiale 46 et/ou une surface de rétention radiale 48. Ces surfaces peuvent être circulaire ou annulaires, et être coaxiales. Le moule 36 comprend une surface de moulage annulaire 50 qui s'étend d'un crochet 36 à l'autre, et/ou qui est délimitée selon la circonférence par au moins un ou chaque crochet 36 ; éventuellement à l'aide d'une surface de butée 46.

Au moins une ou chaque extrémité radiale externe de paroi radiale 40 peut présenter une surface de guidage annulaire 52, éventuellement conique. Les surfaces de guidage 52 peuvent s'écarter l'une de l'autre vers l'extérieur. Elles peuvent s'étendre majoritairement radialement. Elles peuvent donner une forme de pointe annulaire à chaque paroi radiale 40.

La longueur mesurée axialement de la paroi axiale 38 est supérieure à la hauteur mesurée radialement d'au moins une, ou de chaque paroi radiale 40. La surface de moulage, c'est-à-dire la surface exposée à la résine, de la paroi axiale 38 est supérieure à la surface de moulage de chaque paroi radiale 40 ; ce qui permet de concentrer les effets de la pression de la résine sur le moule 36. En complément, la paroi axiale 38 peut être plus fine qu'au moins une ou que chaque paroi radiale 40, de sorte à favoriser la déformation de la paroi axiale 38 sous l'action de la pression de la résine injectée.

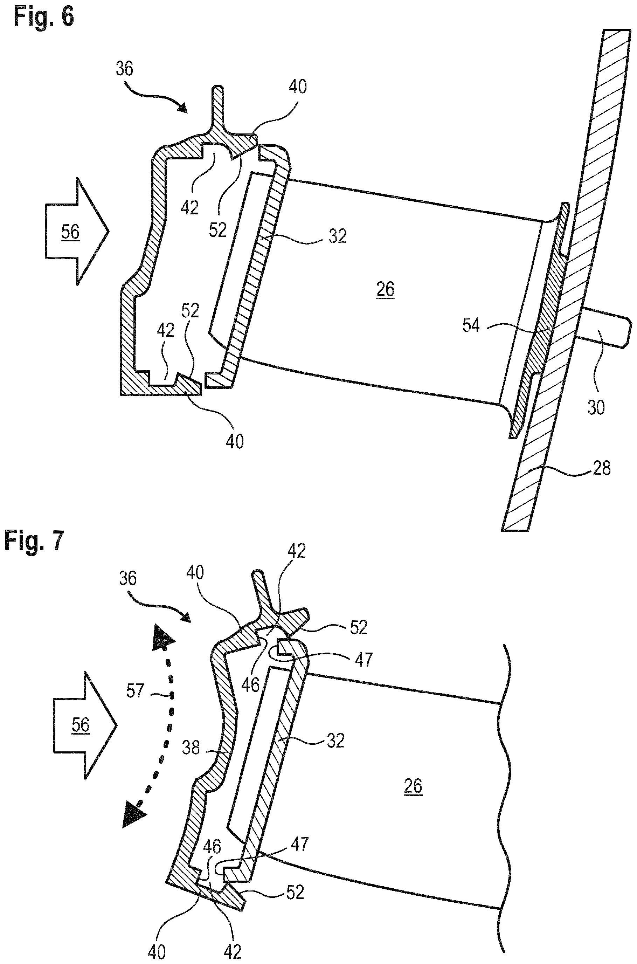

La figure 6 représente une première phase intermédiaire de l'étape de (b) mise en place du moule 36 contre la virole interne 32.

Un carter externe 28 de compresseur avec des aubes 26 et une ou plusieurs viroles 32 est préalablement fourni ou fabriqué. Le carter 28 peut être un carter de compresseur tel que celui représenté en figure 2. Le carter 28 peut être réalisé en composite, par exemple avec une résine organique et une préforme fibreuse. Les aubes statoriques 26 sont fixées sur le carter 28, et disposées en rangées annulaires. Les aubes 26 peuvent comprendre des plateformes 54 plaquées contre la surface interne du carter 28. Les plateformes 54 peuvent comprendre des moyens de fixations 30, tels des tiges filetées insérées dans des orifices du carter. Le carter 28 est disposé verticalement, à plat contre l'une de ses faces axiales ; par exemple contre la face aval.

Les extrémités internes des aubes 26 servent de support de fixation pour les viroles internes 32. Celles-ci présentent des ouvertures dans lesquelles sont introduites les extrémités d'aubes. Ensuite, les extrémités d'aubes 26 sont fixées à la virole 32. La fixation peut être à l'aide d'une plaquette de rétention. Le jeu entre les ouvertures et les extrémités d'aubes peut être refermé à l'aide d'un joint silicone, ou à l'aide même du matériau abradable. Des masques de moulage peuvent alors être appliqués sur les ouvertures, à l'opposé du moule 36 d'injection.

Le moule 36 est amené contre la virole interne selon la flèche 56. Il est approché radialement depuis l'intérieur. Les extrémités externes de ses parois radiales 40 viennent en contact de la virole 32, par exemple en amont et en aval, sur les bords circulaires amont et aval de la ou de chaque virole 32. Concernant le moule 36, le contact peut être au niveau des surfaces de guidage 52. La virole 32 peut être biseautée en regard des surfaces de guidage. Presser le moule 36 contre la virole 32 peut permettre d'écarter, d'ouvrir le moule 36.

La figure 7 représente une deuxième phase intermédiaire de l'étape (b) mise en place du moule 36 contre la virole 32. Lors de cette étape, le profil de révolution du moule est plié, éventuellement arqué de sorte à l'ouvrir.

En pressant radialement le moule vers la virole 32 selon la flèche 56, il tend à s'ouvrir axialement. Le profil de révolution de la paroi 38 se plie selon la flèche 57. Les surfaces de guidage 52 glissent contre la virole 32. Elles peuvent être inclinées l'une par rapport à l'autre d'un angle inférieur à 90°, préférentiellement inférieur à 60°, plus préférentiellement inférieur à 45° ; éventuellement inférieur à 30° pour diminuer l'effort radial nécessaire à l'ouverture axiale du moule 36. La paroi axiale 38 forme un pivot virtuel circulaire pour les crochets 42 en se pliant.

Le moule 36 s'ouvre pour que la virole 32 entre dans les crochets 42. Le mouvement de poussée est prolongé jusqu'à ce que la virole 32 soit totalement engagée dans les crochets 42, par exemple jusqu'à ce que la virole 32 vienne contre les surfaces de butée 46 des crochets 42. La virole peut 32 peut comprendre des surfaces de réception 47 correspondantes, aptes à recevoir les surfaces de butée 46 du moule 36. Ces surfaces (46 ; 47) forment l'interface de moulage moule virole. Au moins une ou chaque surface de réception 47 peut être annulaire ou une portion d'arc, et peut être orientée radialement vers l'intérieur. Les surfaces de rétention recouvrent et/ou épousent partiellement la surface externe de la virole. Ainsi, les crochets 42 permettent un positionnement radial, une rétention, un blocage contre la virole 32 ; en plus d'un indexage.

La virole 32 peut être introduite dans les deux crochets 42 à la fois. Préférentiellement, elle est introduite dans un crochet 42 après l'autre, par exemple dans le crochet de plus petit diamètre, puis dans l'autre.

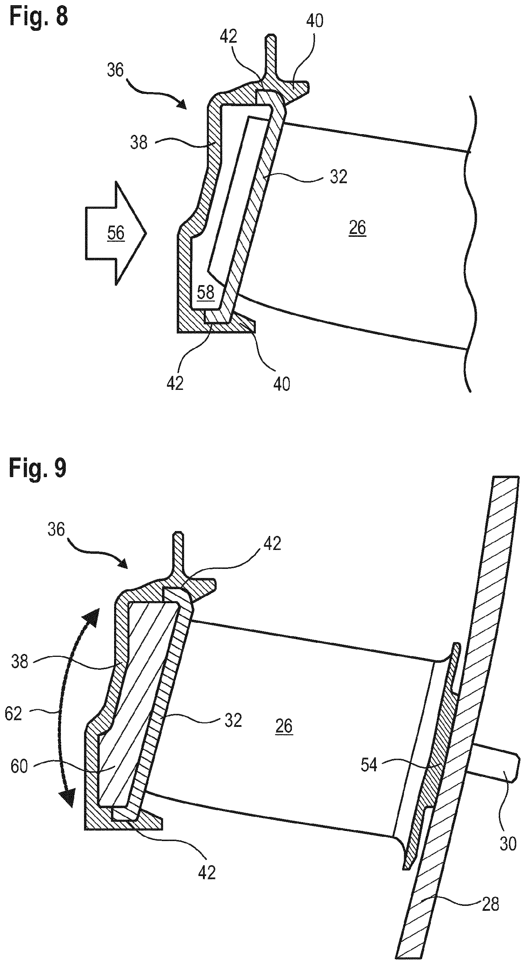

La figure 8 représente le moule 36 en position contre la virole 32.

Lorsque la position en butée est atteinte, la virole 32 et le moule 38 délimitent une cavité de moulage 58. Cette cavité est une cavité annulaire 58 grâce au moule lorsqu'il est d'un seul tenant, ou grâce à tous ses segments ; la virole pouvant également être segmentée. La cavité 58 parcourt tout le tour de la virole. Les extrémités internes des aubes peuvent être présentes dans la cavité de moulage.

Au moins un ou chaque crochet 42 épouse le bord amont ou le bord aval de la virole 32. De la sorte, une étanchéité peut être créée afin d'éviter que la résine ne s'échappe malgré la pression d'injection qui peut être supérieure à 3 bars ou même 10 bars. Les surfaces des crochets 42 peuvent être des surfaces d'étanchéité. Cette étanchéité peut être tout à fait suffisante pour l'injection d'une résine silicone, et un moule avec au moins deux orifices d'injection et/ou au moins deux évents ; généralement diamétralement opposés. La virole 32 pouvant présenter des brides radiales en amont et en aval, les crochets peuvent également épouser ces brides pour améliorer l'étanchéité.

La figure 9 représente l'étape (c) d'injection de résine 60 à l'intérieur de la cavité de moulage.

Lors de l'étape (c) injection de la résine 60 dans la cavité de moulage, la pression augmente et reste élevée, au moins le temps que la résine se répartisse. Cette pression exerce une contrainte contre la paroi axiale 38 et la déforme de sorte que son profil de révolution se plie, s'arque selon la flèche 62, par exemple dans le sens inverse que lors de l'étape (b) mise en place du moule 36. Puisque les crochets 42 sont solidaires de la paroi axiale 38, ils suivent cette déformation et augmentent leur contrainte de plaquage contre la virole 32. Les crochets 42 tendent à se rapprocher l'un de l'autre, les profils de révolution des parois axiales basculent l'un vers l'autre. Ces déformations et contraintes améliorent l'étanchéité entre les crochets 42 et la virole 32, ce qui a pour effet de compléter l'effet d'éventuels joints circulaires (non représentés). Eventuellement, les joints circulaires peuvent être supprimés. La pression dans la cavité de moulage peut diminuer à mesure que la résine polymérise, et éventuellement redevenir nulle.

Toujours en raison de la pression d'injection, les crochets 42 du moule 36 peuvent sensiblement s'ouvrir. Ainsi, leurs surfaces de butée 46 tendent à s'écarter radialement vers l'intérieur des surfaces de réception 47 de la virole 32. Dès lors l'interface de moulage s'ouvre, et de la résine peut y pénétrer.

Suite à la totale polymérisation de la résine, le moule 42 peut être démonté de la virole. Il peut être extrait en le déformant, en écartant les crochets puis en le tirant radialement vers l'intérieur. Eventuellement, le moule peut être détruit pour le démoulage. En raison de l'éventuelle déformation des crochets 42, une pellicule de résine polymérisée peut recouvrir au moins partiellement au moins une ou chaque surface de réception de la virole.

Dans la description, les caractéristiques sont présentées en relation avec une virole interne. Toutefois, l'invention s'applique en totalité à une virole externe, continue ou segmentée.

## Revendications

1. Moule (36) pour injection d'une couche de matériau abradable (34) à l'intérieur d'une virole (32) de turbomachine axiale (2), le moule (36) comprenant une paroi circulaire s'étendant axialement (38), deux parois annulaires s'étendant radialement (40) vers l'extérieur depuis les extrémités axiales de la paroi axiale (38) ; les parois (38 ; 40) étant configurées pour former une cavité annulaire de moulage (58) à l'intérieur de la virole (32) en combinaison avec la virole (32),
**caractérisé en ce que**
chaque paroi radiale (40) du moule comprend un crochet annulaire (42) destiné à être en contact de la surface externe de la virole (32) de sorte à permettre un maintien du moule (36) par rapport à la virole (32).

2. Moule (36) selon la revendication 1, **caractérisé en ce que** les crochets (42) forment des gorges annulaires ouvertes axialement l'une vers l'autre, chaque crochet (42) comprend une surface annulaire de rétention (48) configurée pour permettre une rétention radiale entre le crochet et la virole (32), et une surface annulaire de butée (46) configurée pour venir en butée radialement contre la virole (32), lesdites surfaces annulaires étant coaxiales.

3. Moule (36) selon l'une des revendications 1 ou 2, **caractérisé en ce qu'**il est segmenté, éventuellement le moule (36) est réalisé en un matériau polymère.

4. Moule (36) selon l'une des revendications 1 ou 3, **caractérisé en ce qu'**il est formé de deux à seize segments angulaires, préférentiellement de quatre à douze segments angulaires, au moins un des segments comprend des extrémités, selon circonférence, planes et parallèles, et au moins un des segments comprend des extrémités planes dont les plans sont inclinés d'au moins 60°, préférentiellement au moins 90°.

5. Moule (36) selon l'une des revendications 1 ou 4, **caractérisé en ce que** les extrémités radialement externes des parois radiales (40) comprennent des surfaces extérieures de guidage (52), éventuellement coniques, qui s'écartent l'une de l'autre vers l'extérieur de sorte à faciliter l'écartement des crochets (42) lors de l'insertion de la virole (32) dans le moule (36).

6. Moule (36) selon l'une des revendications 1 ou 5, **caractérisé en ce que** la paroi axiale (38) comprend une portion annulaire de moindre épaisseur disposée axialement en son centre, préférentiellement l'épaisseur de la paroi axiale (38) est inférieure à l'épaisseur des parois radiales (40).

7. Moule (36) selon l'une des revendications 1 ou 6, **caractérisé en ce que** la longueur axiale de la paroi axiale (38) est supérieure à la hauteur radiale de chaque paroi radiale (40), préférentiellement le profil de révolution de la paroi axiale (38) est sensiblement incurvé vers l'intérieur de sorte que lors de l'injection de la résine, la résine tend à arquer vers l'intérieur le profil de révolution de la paroi axiale (38) de sorte à plaquer d'avantage les parois radiales (40) contre la virole (32).

8. Procédé de moulage d'une couche de résine (60), notamment de matériau abradable (34), à l'intérieur d'une virole (32) de turbomachine axiale (2), le procédé comprenant les étapes de :
(a) fourniture ou fabrication (100) d'une virole (32) de turbomachine (2), ladite virole étant reliée à une rangée annulaire d'aubes statoriques (26),
(b) mise en place (102) d'un moule (36) contre la virole (32) de sorte à définir une cavité annulaire de moulage (58) à l'intérieur de la virole (32),
(c) injection (104) d'une résine (60) à l'intérieur de la cavité de moulage (58),
**caractérisé en ce que**
le moule (36) comprend des crochets annulaires (42) configurés pour maintenir le moule (36) contre la virole (32), et **en ce que** lors de l'étape (b) mise en place du moule (36) contre la virole, le moule (36) est déformé de sorte à engager la virole (32) dans les crochets (42) du moule (36).

9. Procédé selon la revendication 8, **caractérisé en ce que** le moule (36) comprend au moins deux crochets (42) disposés en amont et en aval de la virole (32), et **en ce que** lors de l'étape (b) mise en place (102) du moule, la virole (32) est engagée dans les crochets (42) en les écartant axialement l'un de l'autre.

10. Procédé selon l'une des revendications 8 ou 9, **caractérisé en ce que** chaque crochet (42) assure une étanchéité entre le moule (36) et la virole (32), préférentiellement une étanchéité circulaire.

11. Procédé selon l'une des revendications 8 ou 10, **caractérisé en ce que** lors de l'étape (b) mise en place (102) du moule (38) contre la virole (32), le moule (38) est pressé radialement contre la virole (32).

12. Procédé selon l'une des revendications 8 ou 11, **caractérisé en ce que** les crochets (42) comprennent chacun une surface de butée radiale (46) et une surface de rétention radiale (48) du moule à la virole (32), lesdites surfaces (46 ; 48) étant radialement opposées et éventuellement annulaires, et **en ce que** lors de l'étape (b) mise en place (102) du moule contre la virole, la surface de butée radiale épouse la virole (32) sur toute sa longueur.

13. Procédé selon l'une des revendications 8 ou 12, **caractérisé en ce que** le moule (36) comprend une paroi annulaire s'étendant axialement (38) entre les crochets (42), et **en ce que** lors de l'étape (b) mise en place (102) du moule (36) contre la virole (32), la paroi axiale (38) est pliée, préférentiellement la paroi axiale (38) comprend un profil de révolution qui est arqué lors de l'étape (b) mise en place (102) du moule contre la virole.

14. Procédé selon la revendication 13, **caractérisé en ce que** lors de l'étape (c) injection (104), la résine (60) exerce une pression contre la paroi axiale (38) et l'arque de sorte à rapprocher les crochets annulaires (42) en les plaquant contre la virole (32), préférentiellement la résine (60) comprend du silicone.

15. Méthode de fabrication d'une turbomachine (2) axiale comprenant une virole avec une couche annulaire de matériau abradable (34) moulée à l'intérieur de la virole (32), la couche d'abradable (34) étant moulée selon un procédé de moulage, **caractérisée en ce que** le procédé de moulage est conforme à l'une des revendications 8 à 14, et la virole (32) comprend au moins une surface de réception (47) de crochet annulaire (42) de moule (36) destiné à être accroché à la virole (32), la au moins une surface de réception (47) étant au moins partiellement recouverte d'un film de matériau abradable.

## Patentansprüche

1. Form (36) für das Einspritzen einer Schicht Abriebmaterial (34) in einen Mantelring (32) einer axialen Turbomaschine (2), wobei die Form (36) eine kreisförmige Wandung beinhaltet, die sich axial erstreckt (38), zwei ringförmige Wandungen, die sich radial (40) nach außen erstrecken, ausgehend von den axialen Enden der axialen Wandung (38); wobei die Wandungen (38; 40) so konfiguriert sind, dass sie einen ringförmigen Formhohlraum (58) innerhalb des Mantelrings (32) in Kombination mit dem Mantelring (32) bilden,
**dadurch gekennzeichnet, dass**
jede radiale Wandung (40) der Form einen ringförmigen Haken (42) beinhaltet, der mit der äußeren Oberfläche des Mantelrings (32) in Kontakt steht, um ein Halten der Form (36) im Verhältnis zum Mantelring (32) zu ermöglichen.

2. Form (36) nach Anspruch 1, **dadurch gekennzeichnet, dass** die Haken (42) ringförmige Nuten bilden, die axial einander gegenüber offen sind, wobei jeder Haken (42) eine ringförmige Rückhaltefläche (48) beinhaltet, die so konfiguriert ist, dass sie eine axiale Rückhaltung zwischen dem Haken und dem Mantelring (32) ermöglicht und eine ringförmige Anschlagfläche (46), die so konfiguriert ist, dass sie axial gegen den Mantelring (32) anliegt, wobei die genannten ringförmigen Flächen koaxial sind.

3. Form (36) nach einem der Ansprüche 1 oder 2, **dadurch gekennzeichnet, dass** sie segmentiert ist und die Form (36) eventuell aus einem Polymermaterial besteht.

4. Form (36) nach einem der Ansprüche 1 oder 3, **dadurch gekennzeichnet, dass** sie aus zwei bis sechzehn ringförmigen Segmenten, vorzugsweise aus vier bis zwölf ringförmigen Segmenten besteht, wobei mindestens eines der Segmente in Umfangsrichtung Enden beinhaltet, die plan und parallel sind und mindestens eines der Segmente plane Enden beinhaltet, deren Ebenen um mindestens 60°, vorzugsweise um mindestens 90° geneigt sind.

5. Form (36) nach einem der Ansprüche 1 oder 4, **dadurch gekennzeichnet, dass** die radial äußeren Enden der radialen Wandungen (40) äußere Führungsflächen (52) beinhalten, die eventuell konisch sind und sich voneinander nach außen abspreizen, um das Abspreizen der Haken (42) beim Einführen des Mantelrings (32) in die Form (36) zu erleichtern.

6. Form (36) nach einem der Ansprüche 1 oder 5, **dadurch gekennzeichnet, dass** die axiale Wandung (38) einen ringförmigen Abschnitt beinhaltet, der eine geringere Dicke aufweist und axial in seinem Zentrum angeordnet ist, wobei die Dicke der axialen Wandung (38) vorzugsweise geringer ist, als die Dicke der radialen Wandungen (40).

7. Form (36) nach einem der Ansprüche 1 oder 6, **dadurch gekennzeichnet, dass** die axiale Länge der axialen Wandung (38) größer ist, als die radiale Höhe jeder radialen Wandung (40), wobei das Rotationsprofil der axialen Wandung (38) deutlich nach innen gebogen ist, so dass beim Einspritzen des Harzes das Harz dazu tendiert, zum Inneren des Rotationsprofils der axialen Wandung (38) zu laufen, so dass die radialen Wandungen (40) stärker gegen den Mantelring (32) gedrückt werden.

8. Verfahren für das Gießen einer Schicht Harz (60), insbesondere eines Abriebmaterials (34), im Inneren eines Mantelrings (32) einer axialen Turbomaschine (2), wobei das Verfahren die folgenden Schritte beinhaltet:
(a) Lieferung oder Herstellung (100) eines Mantelrings (32) einer Turbomaschine (2), wobei der genannte Mantelring mit einer ringförmigen Reihe von Statorschaufeln (26) verbunden ist,
(b) Einsetzen (102) einer Form (36) gegen den Mantelring (32), um einen Formhohlraum (58) im Inneren des Mantelrings (32) zu definieren,
(c) Einspritzen (104) eines Harzes (60) in das Innere des Formhohlraums (58), **dadurch gekennzeichnet, dass**
die Form (36) ringförmige Haken (42) beinhaltet, die so konfiguriert sind, dass sie die Form (36) gegen den Mantelring (32) halten und beim Schritt (b) des Einsetzens der Form (36) gegen den Mantelring die Form (36) so verformt wird, dass der Mantelring (32) in die Haken (42) der Form (36) eingeführt wird.

9. Verfahren nach Anspruch 8, **dadurch gekennzeichnet, dass** die Form (36) mindestens zwei Haken (42) beinhaltet, die oberhalb und unterhalb des Mantelrings (32) angeordnet sind und dass beim Schritt (b) des Einsetzens (102) der Form der Mantelring (32) in die Haken (42) eingeführt wird, indem er sie axial voneinander abspreizt.

10. Verfahren nach einem der Ansprüche 8 oder 9, **dadurch gekennzeichnet, dass** jeder Haken (42) eine Dichtigkeit zwischen der Form (36) und dem Mantelring (32) und vorzugsweise eine kreisförmige Dichtigkeit sicherstellt.

11. Verfahren nach einem der Ansprüche 8 oder 10, **dadurch gekennzeichnet, dass** beim Schritt (b) des Einsetzens (102) der Form (38) gegen den Mantelring (32) die Form (38) radial gegen den Mantelring (32) gepresst wird.

12. Verfahren nach einem der Ansprüche 8 oder 11, **dadurch gekennzeichnet, dass** die Haken (42) jeweils eine radiale Anschlagfläche (46) und eine radiale Rückhaltefläche (48) der Form im Mantelring (32) beinhalten, wobei die genannten Flächen (46; 48) radial und eventuell kreisförmig einander gegenüberliegen und dass sich beim Schritt (b) des Einsetzens (102) der Form gegen den Mantelring die radiale Anschlagfläche in ganzer Länge an den Mantelring (32) anschmiegt.

13. Verfahren nach einem der Ansprüche 8 oder 12, **dadurch gekennzeichnet, dass** die Form (36) eine ringförmige Wandung beinhaltet, die sich axial (38) zwischen den Haken (42) erstreckt und dass beim Schritt (b) des Einsetzens (102) der Form (36) gegen den Mantelring (32) die axiale Wandung (38) gebogen wird, wobei die axiale Wandung (38) vorzugsweise ein Rotationsprofil beinhaltet, das beim Schritt (b) des Einsetzens (102) der Form gegen den Mantelring gebogen wird.

14. Verfahren nach Anspruch 13, **dadurch gekennzeichnet, dass** beim Schritt (c) des Einspritzens (104) das Harz (60) einen Druck gegen die axiale Wandung (38) ausübt und in der Weise verbiegt, dass die ringförmigen Haken (42) angenähert werden, indem sie gegen den Mantelring (32) gedrückt werden, wobei das Harz (60) vorzugsweise Silikon enthält.

15. Methode für die Herstellung einer axialen Turbomaschine (2) mit einem Mantelring mit einer ringförmigen Schicht eines Abriebmaterials (34), die im Inneren des Mantelrings (32) geformt wird, wobei die Abriebschicht (34) anhand eines Gießverfahrens geformt wird, **dadurch gekennzeichnet, dass** das Gießverfahren einem der Ansprüche 8 bis 14 entspricht, wobei der Mantelring (32) mindestens eine Aufnahmefläche (47) für ringförmige Haken (42) der Form (36) beinhaltet, die dazu bestimmt ist, um an den Mantelring (32) angehängt zu werden, wobei die oder mindestens eine Aufnahmefläche (47) mindestens teilweise mit einer Schicht Abriebmaterial bedeckt ist.

## Claims

1. A mould (36) for injecting a layer of abradable material (34) inside a shroud (32) of an axial-flow turbomachine (2), the mould (36) comprising a circular wall extending axially (38) and two annular walls extending radially (40) outwardly from the axial ends of the axial wall (38); the walls (38; 40) being configured to form an annular moulding cavity (58) inside the shroud (32) in combination with the shroud (32),
**characterized in that**
each radial wall (40) of the mould comprises an annular hook (42) intended to be in contact with the outer surface of the shroud (32) so as to allow the mould (36) to be held in relation to the shroud (32).

2. Mould (36) according to Claim 1, **characterized in that** the hooks (42) form annular grooves that are open axially towards one another, each hook (42) comprises an annular retention surface (48) configured to allow a radial retention between the hook and the shroud (32), and an annular stop surface (46) configured to come into radial abutment against the shroud (32), said annular surfaces being coaxial.

3. Mould (36) according to one of Claims 1 or 2, **characterized in that** it is segmented, and the mould (36) is possibly made of a polymeric material.

4. Mould (36) according to one of Claims 1 or 3, **characterized in that** it is formed from two to sixteen angular segments, preferably from four to twelve angular segments, at least one of the segments comprises planar and parallel ends, along the circumference, and at least one of the segments comprises planar ends of which the planes are inclined by at least 60°, preferably at least 90°.

5. Mould (36) according to one of Claims 1 or 4, **characterized in that** the radially outer ends of the radial walls (40) have outer guiding surfaces (52), possibly conical, which spread apart from one another outwardly so as to facilitate the spreading of the hooks (42) as the shroud (32) is inserted into the mould (36).

6. Mould (36) according to one of Claims 1 or 5, **characterized in that** the axial wall (38) comprises a thinner annular portion disposed axially at the centre thereof, the thickness of the axial wall (38) preferably being less than the thickness of the radial walls (40).

7. Mould (36) according to one of Claims 1 or 6, **characterized in that** the axial length of the axial wall (38) is greater than the radial height of each radial wall (40), the revolution profile of the axial wall (38) preferably being substantially curved inwardly, such that, as the resin is injected, the resin tends to arch the revolution profile of the axial wall (38) inwardly so as to better press the radial walls (40) against the shroud (32).

8. Method for moulding a resin layer (60), in particular of abradable material (34), inside a shroud (32) of an axial-flow turbomachine (2), the method comprising the steps of:
(a) providing or producing (100) a shroud (32) of a turbomachine (2), said shroud being connected to an annular row of stator blades (26),
(b) placing (102) a mould (36) against the shroud (32) to as to define an annular moulding cavity (58) inside the shroud (32),
(c) injecting (104) a resin (60) inside the moulding cavity (58),
**characterized in that**
the mould (36) comprises annular hooks (42) configured to hold the mould (36) against the shroud (32), and **in that**, during step (b), placing the mould (36) against the shroud, the mould (36) is deformed so as to engage the shroud (32) in the hooks (42) of the mould (36).

9. Method according to Claim 8, **characterized in that** the mould (36) comprises at least two hooks (42) disposed upstream and downstream of the shroud (32), and **in that**, during step (b), placing the mould (102), the shroud (32) is engaged in the hooks (42) by distancing these axially from one another.

10. Method according to one of Claims 8 or 9, **characterized in that** each hook (42) provides a seal between the mould (36) and the shroud (32), preferably a circular seal.

11. Method according to one of Claims 8 or 10, **characterized in that**, during step (b), placing (102) the mould (38) against the shroud (32), the mould (38) is pressed radially against the shroud (32).

12. Method according to one of Claims 8 or 11, **characterized in that** the hooks (42) each have a radial stop surface (46) and a radial retention surface (48) for retaining the mould on the shroud (32), said surfaces (46; 48) being radially opposed and possibly annular, and **in that**, during step (b), placing (102) the mould against the shroud, the radial stop surface hugs the shroud (32) over the entire length thereof.

13. Method according to one of Claims 8 or 12, **characterized in that** the mould (36) comprises an annular wall extending axially (38) between the hooks (42), and **in that**, during step (b), placing (102) the mould (36) against the shroud (32), the axial wall (38) is bent, the axial wall (38) preferably comprising a revolution profile that is arched during step (b), placing (102) the mould against the shroud.

14. Method according to Claim 13, **characterized in that**, during step (c), injection (104), the resin (60) exerts a pressure against the axial wall (38) and arches this so as to bring the annular hooks (42) closer together, pressing them against the shroud (32), the resin (60) preferably comprising silicone.

15. Axial turbomachine (2), comprising an inner shroud with an annular layer of abradable material (34) moulded inside the inner shroud (32), the abradable layer (34) being moulded in accordance with a moulding method, **characterized in that** that the moulding method corresponds to one of Claims 8 to 14 and the shroud (32) comprises at least one reception surface (47) of the annular hook (42) of the mould (36) intended to be engaged to the shroud (32), the at least one reception surface (47) being at least partially covered of an abatable material film.
